# EUROPÄISCHE PATENTANMELDUNG

(11) **EP 1 785 589 A1**
(43) Veröffentlichungstag der Anmeldung: **16.05.2007**
(21) Anmeldenummer: 05024568.7
(22) Anmeldetag: 10.11.2005
(51) Int. Cl.: F01D 5/14

(54) **Turbinenschaufel, insbesondere für eine Turbine eines thermischen Kraftwerks**

(71) Anmelder: SIEMENS AKTIENGESELLSCHAFT, 80333 München (DE)
(72) Erfinder: Berlich, Carsten, 41564 Kaarst (DE); Hermeter, Jürgen, Dr., 48336 Sassenberg (DE); Stüer, Heinrich, Dr., 45721 Haltern (DE)

(57) **Zusammenfassung**

Eine Turbinenschaufel, insbesondere für eine Turbine eines thermisches Kraftwerks, mit einem Schaufelblatt (16), das von einem Strömungsmedium (18) anströmbar ist und eine druckseitige Oberfläche (20) sowie eine saugseitige Oberfläche (22) aufweist, ist erfindungsgemäß dadurch gekennzeichnet, dass das Schaufelblatt (16) mindestens einen die druckseitige Oberfläche (20) und die saugseitige Oberfläche (22) verbindenden Durchlass (24) zum Durchleiten von Strömungsmedium (18) während dem Betrieb der Turbine aufweist.

## Beschreibung

Die Erfindung betrifft eine Turbinenschaufel, insbesondere für eine Turbine eines thermischen Kraftwerks, mit einem Schaufelblatt, das von einem Strömungsmedium anströmbar ist und eine druckseitige Oberfläche sowie eine saugseitige Oberfläche aufweist. Weiterhin betrifft die Erfindung eine Turbine mit einer derartigen Turbinenschaufel. Bei einer derartigen Turbinenschaufel kann es sich um eine Schaufel für eine Dampf- oder Gasturbine handeln, aber auch um eine Turbinenschaufel einer andersartigen Turbine, wie etwa einer Flugzeugturbine.

Bei supersonischen Turbinenschaufeln mit hoher Abströmmachzahl kann es zu selbsterregten Schwingungen der Schaufeln kommen. Beim Betrieb von derartige Turbinenschaufeln aufweisenden Turbinen bildet sich ein Verdichtungsstoß an der Hinterkante schwalbenschwanzförmig aus. Der Verdichtungsstoß trifft dann auf die Saugseite einer der Turbinenschaufeln. Die laminare Strömung auf der Saugseite schlägt über eine Ablöseblase in den turbulenten Zustand um. Die Interaktion zwischen Stoß und Grenzschicht ist nicht stationär. Die Stoßfront wandert dann auf der Saugseite der Turbinenschaufel mit einer hohen Frequenz. Die Änderung in der Druckverteilung für die Turbinenschaufel führen zu einer aerodynamischen Anregung. Liegt die Eigenfrequenz der Turbinenschaufel in Resonanz mit der aerodynamischen Anregungsfrequenz, so entstehen Resonanzschwingungen, die zum Versagen der Turbinenschaufel führen.

Um derartige Resonanzschwingungen zu vermeiden, wird im Stand der Technik bei freistehenden Turbinenschaufeln ein Mistuning der Schaufeleigenfrequenzen durchgeführt. Hierdurch lassen sich die Schaufeln derart verstimmen, dass eine aerodynamische Anregung vermieden werden kann, da zwei benachbarte Schaufeln nicht mehr in Phase schwingen. Die aerodynamische Strömung ändert dadurch ihr zeitliches Verhalten und es kommt damit nicht mehr zur Anregung. Allerdings ist beispielsweise bei Deckbandschaufeln ein derartiges Mistuning nicht durchführbar. Mittels des Deckbandes sind alle Schaufeln stark miteinander gekoppelt. In diesem Fall liegen lediglich Systemfrequenzen für den gesamten Schaufelkranz vor, die sich nur für bestimmte Frequenzen und Schwingungsmoden verstimmen lassen.

Bei einem weiteren im Stand der Technik bekannten Ansatz zur Vermeidung der Schaufelschwingungen wird durch zusätzliche Dämpfungselemente versucht, die Schwingungsamplituden im Resonanzfall klein zu halten. Bekannt sind z.B. Dämpfungselemente im Schaufelbereich oder Dämpfungselemente unter der Fußplatte von Schaufeln. Beispielsweise bei Deckbandschaufeln wird über die Deckplatten eine geringfügig erhöhte Dämpfung hervorgerufen.

Eine der Erfindung zugrunde liegende Aufgabe besteht darin, eine Turbine mit einer Turbinenschaufel der eingangs genannten Art dahingehend zu verbessern, dass im Turbinenbetrieb mit hohen Abströmmachzahlen eine Schwingungsanregung der Turbinenschaufel vermieden wird und gleichzeitig die Turbine mit hoher Effizienz betrieben werden kann.

Diese Aufgabe ist erfindungsgemäß mit einer gattungsgemäßen Turbinenschaufel gelöst, bei der das Schaufelblatt mindestens einen die druckseitige und die saugseitige Oberfläche verbindenden Durchlass zum Durchleiten von Strömungsmedium während dem Betrieb der Turbine aufweist. Die Aufgabe ist ferner mit einer Turbine gelöst, die eine derartige Turbinenschaufel aufweist.

Durch das Vorsehen eines die druckseitige Oberfläche und die saugseitige Oberfläche verbindenden Durchlasses wird Strömungsmedium während dem Betrieb der Turbine von der Druckseite zur Saugseite der Schaufel geleitet. Das an der Saugseite austretende Strömungsmedium strömt vorteilhafterweise an der saugseitigen Oberfläche der Turbinenschaufel entlang und legt sich insbesondere als Film auf die betreffende Schaufeloberfläche. Dies bewirkt einen laminar/turbulenten Umschlag der Grenzschicht bereits vor dem Auftreffen des Verdichtungsstoßes auf die Saugseite. Die Wechselwirkung mit der turbulenten Grenzschicht unterdrückt vorteilhafterweise die Schwingung des Verdichtungsstoßes, zumindest kommt es zu einer Verschiebung der Anregungsfrequenz.

Durch das zur saugseitigen Oberfläche hin strömende Strömungsmedium wird der bisherige Anregungsmechanismus durchbrochen. Eine Resonanzanregung der Turbinenschaufel kann damit vermieden werden. Gleichzeitig kann aber die Turbine mit hoher Effizienz betrieben werden. Bei Verwendung der erfindungsgemäßen Turbinenschaufel werden nämlich effizienzmindernde Maßnahmen, wie sie im Stand der Technik zur Vermeidung einer Resonanzkatastrophe notwendig sind und welche etwa ein Mistuning der Schaufeleigenfrequenzen oder das Einbauen von Dämpfungselementen umfassen können, überflüssig. Die Turbinenschaufeln können in ihrer Form ohne entsprechende Einschränkungen hinsichtlich ihrer Effizienz optimiert entwickelt werden.

Weiterhin können durch die wirksame Vermeidung von Schaufelanregung die Turbinenschaufeln gemäß der Erfindung auch in Turbinenbereichen mit hohen Abströmmachzahlen betrieben werden. Dadurch können z.B. die Endstufen von Dampfturbinen vergrößert werden, wodurch letztlich der Wirkungsgrad des zugehörigen Kraftwerks steigt.

In vorteilhafter Ausführungsform ist der Durchlass als Bohrung und/oder als Schlitz ausgebildet. Insbesondere ist das Vorsehen mehrerer Bohrungen vorteilhaft. Durch das Vorsehen einer Vielzahl von Bohrungen oder eines Schlitzes wird eine zum Verhindern der Ausbildung von Schwingungsanregungen ausreichende Flussrate des Strömungsmediums durch den Durchlass ermöglicht. Insbesondere kann bei entsprechender Erstreckung des Schlitzes bzw. der Bohrungen über das Schaufelblatt eine flächige Strömung entlang der saugseitigen Oberfläche derart ausgebildet werden, dass eine Schwingungsanregung durch einen Verdichtungsstoß besonders wirkungsvoll verhindert werden kann.

Um eine Schwingungsanregung besonders wirkungsvoll vermeiden zu können, ist es zweckmäßig, wenn der Durchlass derart gestaltet ist, dass während dem Betrieb der Turbine durch den Durchlass hindurchtretendes Strömungsmedium an der saugseitigen Oberfläche des Schaufelblattes filmartig entlang strömt. Damit kann ein laminar/turbulenter Umschlag der Grenzschicht bereits vor Auftreffen des Druckstoßes auf der Saugseite bewirkt werden. Durch eine daraus erfolgende Verschiebung der Anregungsfrequenz des Verdichtungsstoßes lässt sich Stoßfluttern der Turbinenschaufeln wirkungsvoll vermeiden.

Vorteilhafterweise ist der Durchlass in einem Bereich der Turbinenschaufel angeordnet, vor dem sich beim Betrieb der Turbinenschaufel ein Verdichtungsstoß ausbildet. Das an der saugseitigen Oberfläche des Schaufelblattes aus dem Durchlass ausströmende Strömungsmedium kann auf diese Weise besonders wirkungsvoll mit dem Verdichtungsstoß wechselwirken. Damit wird die Schwingung des Verdichtungsstoßes besonders wirkungsvoll unterdrückt.

Zweckmäßigerweise ist der Durchlass in einem Bereich des Schaufelblattes angeordnet, der bei in der Turbine montierter Turbinenschaufel nahe eines Gehäuses der Turbine, insbesondere in einer Schaufelhöhe von 75% bis 95% angeordnet ist. Die Schaufelhöhe definiert sich in diesem Zusammenhang aus dem Verhältnis zwischen dem Abstand von der Rotornabe zur Gesamtschaufellänge in Radialrichtung des Rotors einer in der Turbine montierten Schaufel. Durch Anordnung des Durchlasses nahe dem Turbinengehäuse kann eine besonders wirksame Unterdrückung von Schaufelanregung durch Stoßfluttern erzielt werden.

Die Wechselwirkung zwischen dem aus der saugseitigen Oberfläche des Schaufelblattes austretenden Strömungsmedium und dem Verdichtungsstoß ist besonders vorteilhaft, wenn der Durchlass mit einem Winkel von 10° bis 30°, insbesondere von etwa 20° in die saugseitige Oberfläche einmündet. Auf diese Weise wird eine aerodynamische Anregung der Schaufel bei hohen Machzahlen wirkungsvoll verhindert.

Weiterhin ist es vorteilhaft, wenn der Durchlass in einem Bereich entlang einer Sehne des Schaufelblattes in die saugseitige Oberfläche des Schaufelblattes einmündet, in dem die Strömungsgeschwindigkeit des Strömungsmediums an der saugseitigen Oberfläche einen Maximalwert, insbesondere einen Maximalwert hinsichtlich der Geschwindigkeitsverteilung des Strömungsmediums entlang der Sehne des Schaufelblattes aufweist. Eine Sehne des Schaufelblattes im oben verwendeten Sinne erstreckt sich quer zur Längsachse der Turbinenschaufel. Die Längsachse der Turbinenschaufel ist bei auf dem Rotor der Turbine montierter Turbinenschaufel in Radialrichtung hinsichtlich des Rotors ausgerichtet. Die Sehne der Turbinenschaufel verläuft entlang der Strömungsrichtung des Strömungsmediums durch die Turbine. Die Strömungsgeschwindigkeit des Strömungsmediums entlang einer Sehne des Schaufelblattes steigt saugseitig in der Regel zunächst an, um nach Durchlaufen eines Maximums wieder abzufallen.

Gemäß der vorliegenden Ausführungsform der Erfindung soll der Durchlass in einem Bereich dieses Maximums angeordnet sein. In diesem Fall ergibt sich ein großer Druckunterschied zwischen Saugseite und Druckseite des Schaufelblattes, was das Hindurchströmen des Strömungsmediums im Betrieb der Turbinenschaufel begünstigt. In dieser Ausführungsform bildet sich an der saugseitigen Oberfläche ein stabiler Film des Strömungsmediums aus.

In einer weiteren vorteilhaften Ausführungsform mündet der Durchlass in einem Bereich entlang einer Sehne des Schaufelblattes in die druckseitige Oberfläche des Schaufelblattes ein, in dem die Strömungsgeschwindigkeit des Strömungsmediums einen hinsichtlich der Geschwindigkeitsverteilung des Strömungsmediums entlang der Sehne des Schaufelblattes an der druckseitigen Oberfläche unterdurchschnittlichen Wert, insbesondere einen Wert nahe einem Minimalwert aufweist. In der Regel steigt die Geschwindigkeit des Strömungsmediums entlang einer Sehne der Turbinenschaufel auf der Druckseite zunächst langsam an, um ab einer bestimmten Schwellengeschwindigkeit erheblich schneller anzusteigen.

Gemäß der vorteilhaften Ausführungsform soll der Durchlass in einem Bereich der Sehne in die druckseitige Oberfläche des Schaufelblattes einmünden, in dem die Geschwindigkeitskurve sich in dem langsam ansteigenden Bereich befindet, d.h. die Strömungsgeschwindigkeit sich damit nahe einem Minimalwert befindet. Dies ermöglicht die Erzeugung eines verhältnismäßig großen Druckunterschieds zwischen den Durchlassmündungen in Saugseite und Druckseite des Schaufelblattes. Der Druckunterschied ist insbesondere besonders groß, wenn sich die Strömungsgeschwindigkeit des Strömungsmediums auf der Saugseite des Schaufelblattes nahe ihrem Maximalwert befindet und auf der Druckseite des Schaufelblattes nahe dem Minimalwert ist. Durch den großen Druckunterschied wird eine wirkungsvolle Ausbildung eines Films auf der Saugseite des Schaufelblattes bewirkt.

Nachfolgend wird ein Ausführungsbeispiel einer erfindungsgemäßen Turbinenschaufel anhand der beigefügten schematischen Zeichnungen näher erläutert. Es zeigt:
- Fig. 1: eine Draufsicht auf eine Anordnung zweier auf einer Rotornabe einer Turbine montierten Turbinenschaufeln mit Blickrichtung quer zur Rotorachse,
- Fig. 2: den Schnitt II-II gemäß Fig. 1, sowie
- Fig. 3: eine typische Geschwindigkeitsverteilung entlang einer druckseitigen Oberfläche und einer saugseitigen Oberfläche einer Sehne eines Schaufelblattes.

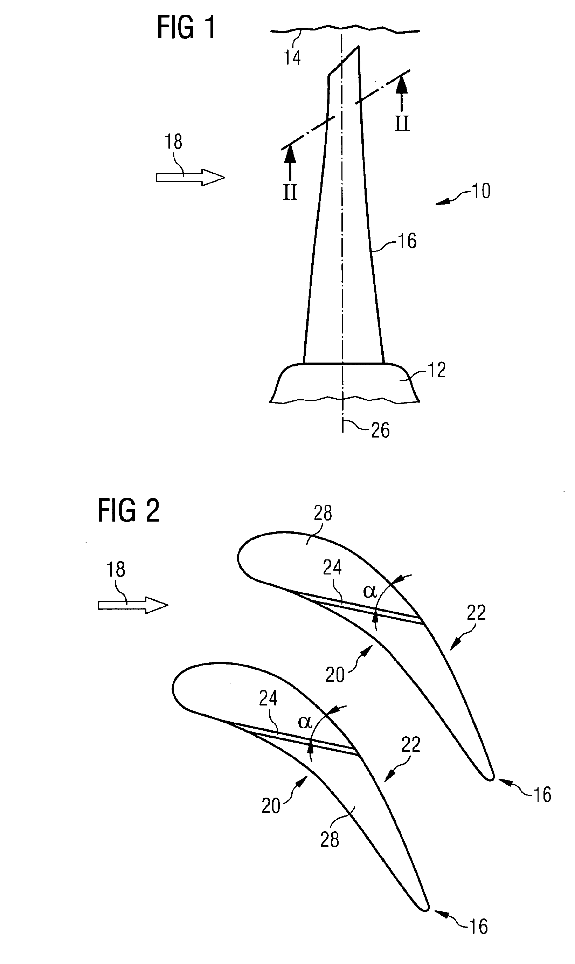

Fig. 1 zeigt zwei in Blickrichtung hintereinander auf einer Rotornabe 12 montierte Turbinenschaufeln 10 in einer erfindungsgemäßen Ausführungsform. Die zur gezeigten Rotornabe 12 zugehörige Rotorachse verläuft von links nach rechts gemäß der Darstellung in Fig. 1. Die Turbinenschaufel 10 ist dabei mit einem Schaufelfuß in der Rotornabe 12 befestigt und weist weiterhin ein sich bis in die Nähe eines Turbinengehäuses 14 erstreckendes Schaufelblatt 16 auf. Das Schaufelblatt 16 wird von einem gemäß der Darstellung nach Fig. 1 von links nach rechts strömenden Strömungsmedium 18 angeströmt.

Fig. 2 zeigt den Schnitt II-II gemäß Fig. 1 in einer Schaufelblatthöhe von etwa 75% bis 95%. Damit sind Sehnen 28 der beiden hintereinander angeordneten Schaufelblätter 16 ersichtlich. Die Schaufelblätter 16 weisen jeweils von dem Strömungsmedium 18 direkt angeströmte druckseitige Oberflächen 20 sowie diesen entgegengesetzt angeordnete saugseitige Oberflächen 22 auf. Durch die Anströmung der druckseitigen Oberflächen 20 der Schaufelblätter 16 bildet sich ein Verdichtungsstoß, der sich zur saugseitigen Oberfläche 22 desjenigen Schaufelblattes 16 hinbewegt, welches der den Verdichtungsstoß bildenden druckseitigen Oberfläche 20 gegenüberliegt.

In der dargestellten erfindungsgemäßen Ausführungsform weisen die Schaufelblätter 16 jeweils mindestens einen die druckseitige Oberfläche 20 und die saugseitige Oberfläche 22 verbindenden Durchlass 24 auf. Dieser Durchlass 24 ist als eine Vielzahl von Bohrungen oder als Schlitz ausgebildet, wobei sich der Schlitz vorzugsweise auf der in Fig. 1 als Schnittebene II-II eingezeichneten Schaufelhöhe erstreckt. Auch die Bohrungen sind vorzugsweise in einer Linie auf der gegebenen Schaufelhöhe angeordnet. Der Durchlass 24 mündet in einem Winkel α mit einem Wert von 10° bis 20°, insbesondere mit einem Winkel α von etwa 20° in die saugseitige Oberfläche 22 ein.

Beim Betrieb der Turbinenschaufeln 10 strömt das Strömungsmedium 18 von der druckseitigen Oberfläche 20 zur saugseitigen Oberfläche 22 und legt sich als Film auf die saugseitige Oberfläche 22 des Schaufelblattes 16. Der Film bewirkt einen laminar/turbulenten Umschlag der Grenzschicht vor dem Auftreffpunkt des Verdichtungsstoßes auf der saugseitigen Oberfläche 22. Die Wechselwirkung mit der turbulenten Grenzschicht unterdrückt die Schwingung des Verdichtungsstoßes, zumindest jedenfalls kommt es zu einer Verschiebung der Frequenz.

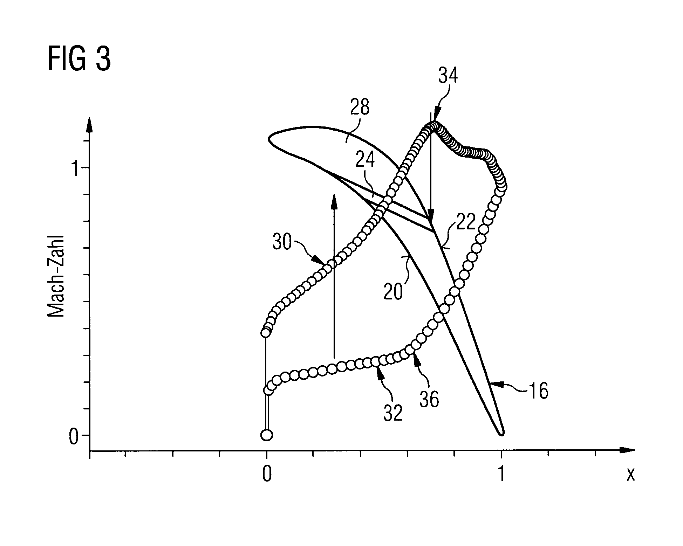

Fig. 3 zeigt sowohl eine Verteilung der saugseitigen Geschwindigkeit 30 als auch der druckseitigen Geschwindigkeit 32 entlang der saugseitigen Oberfläche 22 bzw. der druckseitigen Oberfläche 20 der gezeigten Sehne 28 des Schaufelblattes 16. Wie aus dem Diagramm ersichtlich, steigt die saugseitige Geschwindigkeit entlang der saugseitigen Oberfläche 22 der Sehne 28 zunächst kontinuierlich an und fällt dann nach Durchlaufen eines Geschwindigkeitsmaximums 34 wieder etwas ab.

Die druckseitige Geschwindigkeit 32 steigt entlang der druckseitigen Oberfläche 20 der Sehne 28 zunächst langsam und ab einer bestimmten Schwellengeschwindigkeit 36 stärker an. Der Durchlass 24 erstreckt sich nun von einem Punkt der druckseitigen Oberfläche 20, an dem die druckseitige Geschwindigkeit 32 unterhalb der Schwellengeschwindigkeit 36 liegt, zu einem Punkt an der saugseitigen Oberfläche 22, an dem die saugseitige Geschwindigkeit 30 nahe dem Geschwindigkeitsmaximum 34 liegt. Damit ist der sich zwischen der druckseitigen Oberfläche 20 und der saugseitigen Oberfläche 22 ergebende Druck des Strömungsmediums 18 möglichst groß.

## Patentansprüche

1. Turbinenschaufel (10),
insbesondere für eine Turbine eines thermisches Kraftwerks,
mit einem Schaufelblatt (16), das von einem Strömungsmedium (18) anströmbar ist und
eine druckseitige Oberfläche (20) sowie eine saugseitige Oberfläche (22) aufweist,
**dadurch gekennzeichnet, dass**
das Schaufelblatt (16) mindestens einen die druckseitige Oberfläche (20) und die saugseitige Oberfläche (22) verbindenden Durchlass (24) zum Durchleiten von Strömungsmedium (18) während dem Betrieb der Turbine aufweist.

2. Turbinenschaufel nach Anspruch 1,
**dadurch gekennzeichnet, dass**
der Durchlass (24) als Bohrung und/oder als Schlitz ausgebildet ist.

3. Turbinenschaufel nach Anspruch 1 oder 2,
**dadurch gekennzeichnet, dass**
der Durchlass (24) derart gestaltet ist, dass während dem Betrieb der Turbine durch den Durchlass (24) hindurchtretendes Strömungsmedium (18) an der saugseitigen Oberfläche (22) des Schaufelblattes (16) filmartig entlang strömt.

4. Turbinenschaufel nach einem der vorausgehenden Ansprüche,
**dadurch gekennzeichnet, dass**
der Durchlass (24) in einem Bereich der Turbinenschaufel (10) angeordnet ist, vor dem sich beim Betrieb der Turbinenschaufel (10) ein Verdichtungsstoß ausbildet.

5. Turbinenschaufel nach einem der vorausgehenden Ansprüche,
**dadurch gekennzeichnet, dass**
der Durchlass (24) in einem Bereich des Schaufelblattes (16), der bei in der Turbine montierter Turbinenschaufel (10) nahe eines Gehäuses (14) der Turbine,
insbesondere in einer Schaufelhöhe von 75% bis 95% angeordnet ist.

6. Turbinenschaufel nach einem der vorausgehenden Ansprüche,
**dadurch gekennzeichnet, dass**
der Durchlass (24) mit einem Winkel von 10° bis 30°, insbesondere von etwa 20° in die saugseitige Oberfläche (22) einmündet.

7. Turbinenschaufel nach einem der vorausgehenden Ansprüche,
**dadurch gekennzeichnet, dass**
der Durchlass (24) in einem Bereich entlang einer Sehne (28) des Schaufelblattes (16) in die saugseitige Oberfläche (22) des Schaufelblattes (16) einmündet, in dem die Strömungsgeschwindigkeit des Strömungsmediums (18) an der saugseitigen Oberfläche einen Maximalwert, insbesondere einen Maximalwert hinsichtlich der Geschwindigkeitsverteilung des Strömungsmediums entlang der Sehne des Schaufelblattes (16) aufweist.

8. Turbinenschaufel nach einem der vorausgehenden Ansprüche,
**dadurch gekennzeichnet, dass**
der Durchlass (24) in einem Bereich entlang einer Sehne (28) des Schaufelblattes (16) in die druckseitige Oberfläche (20) des Schaufelblattes (16) einmündet, in dem die Strömungsgeschwindigkeit des Strömungsmediums (18) einen hinsichtlich der Geschwindigkeitsverteilung des Strömungsmediums (18) entlang der Sehne (28) des Schaufelblattes (16) an der druckseitigen Oberfläche (20) unterdurchschnittlichen Wert, insbesondere einen Wert nahe einem Minimalwert aufweist.

9. Turbine mit einer Turbinenschaufel (10) nach einem der vorausgehenden Ansprüche.
